# EUROPÄISCHE PATENTANMELDUNG

(11) **EP 0 846 883 A1**
(43) Veröffentlichungstag der Anmeldung: **10.06.1998**
(21) Anmeldenummer: 97118413.0
(22) Anmeldetag: 23.10.1997
(51) Int. Cl.: F16D 23/06, B22F 5/08

(54) **Synchronisationseinrichtung für Getriebe und Verfahren zum Anspitzen von Zähnen eines gesinterten Synchronisationskörpers**

(30) Priorität: 16.11.1996 DE 19647524; 11.01.1997 DE 19700769
(71) Anmelder: GETRAG Getriebe- und Zahnradfabrik Hermann Hagenmeyer GmbH & Cie, D-71636 Ludwigsburg (DE)
(72) Erfinder: Helms, Georg, 74391 Erligheim (DE); Kohler, Petra, 71726 Benningen (DE)
(74) Vertreter: Witte, Alexander, Dr.-Ing.

(57) **Zusammenfassung**

Es werden eine Synchronisationseinrichtung für Getriebe sowie ein Verfahren zum Anspitzen von Zähnen eines gesinterten derartigen Synchronisationskörpers beschrieben. Die Zähne (40) stehen aus einer Oberfläche (41) des Synchronisationskörpers vor. Sie haben eine radial zu einer Verschieberichtung des Synchronisationskörpers im wesentlichen trapezförmige Querschnittsform. Die Zähne (40) sind relativ zur Verschieberichtung angespitzt, derart, daß eine vordere Scheitellinie (48) der Spitze unter einem ersten Winkel (ϕ) aus der Oberfläche (41) austritt. Beidseits der Scheitellinie (48) erstrecken sich geneigte, die Spitze bildende Stirnflächen (47), die in einer Oberseite (45) der Zähne (40) einen zweiten Winkel (γ₁) miteinander bilden. Die Stirnflächen (47) weisen zur Verkleinerung des zweiten Winkels (γ₂) einen oberen, von der Spitze weg abgeknickten Bereich (47a') auf.

## Beschreibung

Die Erfindung betrifft eine Synchronisationseinrichtung für Getriebe mit einem mit Zähnen versehenen Sychronisationskörper, wobei die Zähne aus einer Oberfläche des Synchronisationskörpers vorstehen und eine radial zu einer Verschieberichtung des Synchronisationskörpers im wesentlichen trapezförmige Querschnittsform aufweisen, wobei ferner die Zähne relativ zur Verschieberichtung angespitzt sind, derart, daß eine vordere Scheitellinie der Spitze unter einem ersten Winkel aus der Oberfläche austritt und sich beidseits der Scheitellinie geneigte, die Spitze bildende Stirnflächen erstrecken, die in einer Oberseite der Zähne einen zweiten Winkel miteinander bilden.

Die Erfindung betrifft ferner ein Verfahren zum Anspitzen von Zähnen eines gesinterten Synchronisationskörpers, bei dem die Zähne aus einer Oberfläche des Sychronisationskörpers vorstehen und eine radial zu einer Verschieberichtung des Synchronisationskörpers im wesentlichen trapezförmige Querschnittsform aufweisen, wobei ferner die Zähne relativ zur Verschieberichtung angespitzt sind, derart, daß eine vordere Scheitellinie der Spitze unter einem ersten Winkel aus der Oberfläche austritt und sich beidseits der Scheitellinie geneigte, die Spitze bildende Stirnflächen erstrecken, die in einer Oberseite der Zähne einen zweiten Winkel miteinander bilden und die Zähne beim Verpressen eines Sinterpulvers ausgeformt werden.

Es ist bekannt, in Getrieben, insbesondere Kraftfahrzeuggetrieben, die erforderlichen Synchronisationseinrichtungen aus Sintermetall herzustellen. Hierzu gehören insbesondere Schiebemuffen, Synchronringe und dgl.

Synchronisationseinrichtungen dieser Art sind üblicherweise als torusförmiges Bauelement ausgebildet. Auf einer Umfangsfläche der Synchronisationseinrichtung sind Zähne ausgebildet, die sich in axialer Richtung erstrecken. Die Zähne sind über der Umfangsfläche erhaben und haben im Radialschnitt eine im wesentlichen trapezförmige Formgebung.

Es ist bekannt, die Zähne an derartigen Synchronisationseinrichtungen vorne anzuspitzen, um den Synchronisationsvorgang zu erleichtern, insbesondere um das Einfädeln der Zähne in die Gegenzähne der komplementären Sychronisationseinrichtung, bspw. des Kupplungsrings, zu erleichtern.

Während derartige Elemente, bspw. Schiebemuffen, früher aus Stahl hergestellt wurden, werden derartige Elemente nunmehr auch im Sinterverfahren hergestellt. Dabei wird ein Sinterpulver in einer entsprechenden Form unter hohem Druck verpreßt. Der so entstehende "Grünling" wird alsdann in einem Sinterofen bei hoher Temperatur gesintert.

Beim Sintern derartiger Synchronisationskörper können aus sintertechnischen Gründen Probleme auftreten, wenn die Formgebung der Spitzen der Zähne bestimmte Spitzenwinkel unterschreitet. Während es nämlich ohne größere Probleme möglich ist, Zähne sintertechnisch herzustellen, deren Spitze verhältnismäßig stumpf ausgebildet ist (Winkel zwischen ca. 110° und 180°), treten beim Herstellen spitzerer Zähne Probleme auf. Diese Probleme liegen darin begründet, daß zum sintertechnischen Herstellen dieser Spitzen entsprechend spitz ausgebildete Werkzeuge erforderlich sind. Diese werden beim Verpressen des Sinterpulvers aber sowohl hohen mechanischen als auch hohen thermischen Belastungen ausgesetzt. Sehr spitz, d.h. schmal auslaufende Spitzen der Werkzeuge halten diesen Belastungen jedoch nicht stand, weil sie sich im jeweils benachbarten Material festfressen können.

Andererseits ist es bei bestimmten Sychronisationseinrichtungen, insbesondere bei sogenannten gekoppelten Mehrfachsynchronisierungen, wünschenswert, spitzere Winkel an den Zahnspitzen auszubilden. Dann wird nämlich der Schaltkomfort beim Durchschalten deutlich verbessert.

Die vorstehend genannten Probleme treten einerseits beim Verpressen des zunächst noch losen Sinterpulvers auf, insbesondere aber beim sogenannten Kalibrieren, d.h. beim Nachverdichten des bereits formstabilen Sinterkörpers.

Der Erfindung liegt daher die Aufgabe zugrunde, eine Sychronisationseinrichtung der eingangs genannten Art dahingehend weiterzubilden, daß sie für eine sintertechnische Herstellung bei spitzen Winkeln an den Zahnspitzen geeignet ist.

Der Erfindung liegt ferner die Aufgabe zugrunde, ein Verfahren der eingangs genannten Art dahingehend weiterzubilden, daß die Herstellung der genannten Synchronisationskörper mit spitzen Winkeln möglich wird.

Bei einer Synchronisationseinrichtung der eingangs genannten Art wird diese Aufgabe erfindungsgemäß dadurch gelöst, daß die Stirnflächen zur Verkleinerung des zweiten Winkels einen oberen, von der Spitze weg abgeknickten Bereich aufweisen.

Bei einem Verfahren der eingangs genannten Art wird die Aufgabe erfindungsgemäß dadurch gelöst, daß die Stirnflächen zur Verkleinerung des zweiten Winkels in einem oberen Bereich abgeknickt werden.

Die der Erfindung zugrundeliegende Aufgabe wird auf diese Weise vollkommen gelöst.

Beim Sintern der genannten Zähne ist nämlich der Übergangsbereich besonders kritisch, in dem der Zahnkörper aus der (bei verhältnismäßig großem Radius der Umfangsfläche) ebenen Oberfläche austritt.

Während nämlich bei herkömmlichen Einrichtungen und Verfahren ein kleinerer Spitzenwinkel dadurch erzeugt werden müßte, daß die Zahnspitze parallel zur Ebene der Oberfläche zusammengedrückt bzw. kalibriert wird, wodurch erhebliche Scherbelastungen im Oberflächenbereich aufträten und dort bestehende Sinterbrücken zerstört würden, ist bei der erfindungsgemäßen Einrichtung bzw. dem erfindungsgemäßen Verfahren vorgesehen, die weitere Anspitzung nur im oberen Bereich vorzusehen. Dadurch wird der Übergang zwischen Zahnkörper und Oberfläche in keiner Weise beeinflußt, so daß die dort vorhandenen Sinterbrücken unbeeinträchtigt bleiben.

Die spitzere Anspitzung nur im oberen, d.h. von der Oberfläche beabstandeten Bereich der Zähne ist für die Funktion der Synchronisationseinrichtung ohne Auswirkung. Der jeweilige Gegenkörper, bspw. der Kupplungskörper relativ zu einer Schiebemuffe, greift nämlich nicht über die gesamte Zahntiefe in die Verzahnung des Synchronisationskörpers ein, sondern nur über eine bestimmte Höhe, üblicherweise in der unteren Hälfte.

Erfindungsgemäß wird daher überwiegend dieser für den wechselseitigen Eingriff der Sychronisationskörper bedeutsame Bereich der Zahnspitzen im Sinne eines kleineren Spitzenwinkels modifiziert. Die abweichende Formgebung gegenüber herkömmlichen Zähnen beschränkt sich daher auf diesen Bereich, der in bezug auf beim Umformen gefährdete Sinterbrücken nicht sensibel ist.

Auf diese Weise ist es erstmals möglich, auch für die bereits erwähnten gekoppelten Mehrfachsynchronisierungen die erforderlichen Sychronisationskörper mit spitzen Zähnen im Sinterverfahren herzustellen, was bislang nicht möglich war.

Das relativ kostengünstige Sinterverfahren kann daher auch bei solchen Synchronisationskörpern mit spitzen Zähnen eingesetzt werden, bei denen es bisher nicht einsetzbar war.

Um die Zähne in dem genannten Sinne teilweise weiter anzuspitzen, sind unterschiedliche Formgebungen möglich.

Bei einem ersten Ausführungsbeispiel der Erfindung ist die Stirnfläche um eine Diagonale abgeknickt, die vom oberen Ende der Scheitellinie zum unteren seitlichen Endpunkt der Stirnfläche führt.

Bei einem anderen Ausführungsbeispiel der Erfindung ist die Stirnfläche hingegen um eine Diagonale abgeknickt, die von einem Punkt auf der Scheitellinie zum unteren seitlichen Endpunkt der Stirnfläche führt, wobei der Punkt vorzugsweise in der unteren Hälfte der Scheitellinie liegt, derart, daß die Scheitellinie zwei zueinander geneigte Abschnitte aufweist, die in dem Punkt aneinanderstoßen.

Diese beiden nur exemplarisch zu verstehenden Ausführungsbeispiele haben den Vorteil, daß die weitere Anspitzung der Zähne entlang von geometrisch definierten Flächen, insbesondere ebenen Flächen, geschieht. Damit haben auch die entsprechenden Werkzeuge eine sehr einfache und kostengünstige Formgebung.

Die Auswahl der jeweiligen Formgebung hängt von den Besonderheiten des jeweiligen Einzelfalls ab.

Bei diesem wie bei anderen Ausführungsbeispielen kann weiter vorgesehen sein, daß der Bereich am unteren seitlichen Endpunkt der Stirnfläche oberhalb der Oberfläche ausgehöhlt ist.

Diese Maßnahme hat den Vorteil, daß der im vorliegenden Zusammenhang besonders sensible Bereich der Zähne, nämlich der bereits erwähnte Übergang zwischen Zahnkörper und Oberfläche, im spitzen Bereich der Zähne von vorneherein weggelassen wird, so daß beim Umformen der Zahnspitzen, insbesondere beim Kalibrieren, dieser nicht vorhandene Bereich naturgemäß auch nicht beeinträchtigt werden kann.

Die Erfindung ist für unterschiedlichste Grundformen der Zähne einsetzbar.

So kann die Erfindung unabhängig davon eingesetzt werden, ob der erste Winkel, den die vordere Scheitellinie der Spitze mit der Oberfläche in Verschieberichtung des Sychronisationskörpers bildet, spitz oder stumpf oder ein rechter Winkel ist.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der beigefügten Zeichnung dargestellt und werden in der nachfolgenden Beschreibung näher erläutert. Es zeigen:
- Fig. 1: eine äußerst schematisierte Schnittdarstellung eines Werkzeugs zum Herstellen einer spitzen Verzahnung für einen Sychronisationskörper, wobei die Zahnspitze verhältnismäßig stumpf ausgebildet ist;
- Fig. 2: eine Ansicht, ähnlich Fig. 1, jedoch für den Fall, daß die Zahnspitze relativ spitz ausgebildet wird;
- Fig. 3: eine perspektivische Ansicht eines Zahns eines Sychronisationskörpers zur Veranschaulichung einer Möglichkeit der weiteren Anspitzung;
- Fig. 4 und 5: Darstellungen, ähnlich Fig. 3, jedoch zur Veranschaulichung eines Ausführungsbeispiels der Erfindung;
- Fig. 6 bis 9: Darstellungen, ähnlich Fig. 4 und 5, jedoch mit zwei zusätzlichen Schnittdarstellungen zur weiteren Veranschaulichung eines weiteren Ausführungsbeispiels der Erfindung;
- Fig. 10: im vergrößerten Maßstab eine Darstellung ähnlich Fig. 4 und 6, für noch ein weiteres Ausführungsbeispiel der Erfindung.

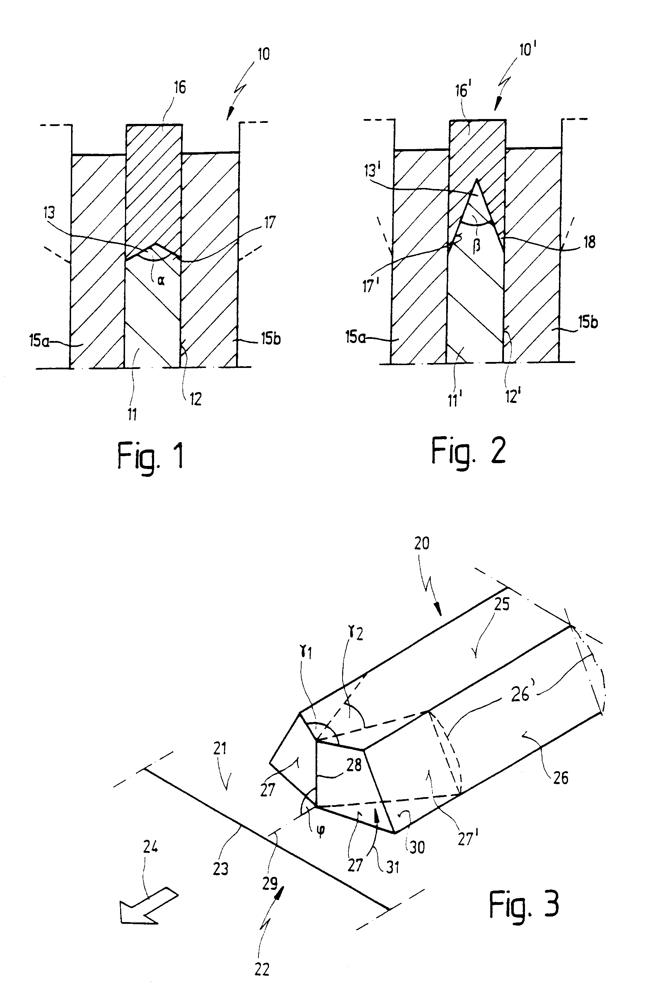

In Fig. 1 bezeichnet 10 insgesamt eine Vorrichtung zum sintertechnischen Herstellen eines Zahns 11 eines nicht weiter dargestellten Synchronisationskörpers, bspw. einer Schiebemuffe eines Kraftfahrzeuggetriebes.

Der Zahn 11 hat zwei in Achsrichtung, d.h. in Verschieberichtung des Synchronisationskörpers verlaufende Seiten 12 sowie eine Spitze 13. Der Winkel der Spitze 13 ist mit α bezeichnet. Der in Fig. 1 dargestellte Zahn 11 ist relativ stumpf. Der Winkel liegt im Bereich zwischen 110 und 180°.

Zum sintertechnischen Herstellen des Zahns 11 dient eine Anordnung mit zwei Formstücken 15a, 15b, die seitlich an den Seiten 12 des auszubildenden oder zu kalibrierenden Zahns 11 anliegen. Die Formstücke 15a, 15b dienen ferner zum Führen eines Stempels 16, der von vorne auf die spitze 13 des Zahns 11 aufgesetzt wird. Um die Spitze 13 auszubilden bzw. zu kalibrieren, ist der Stempel 16 an vorderen Ende mit einer zur Spitze 13 komplementären Kontur 17 versehen.

Beim Einfahren des Stempels 16 zwischen den Formstücken 15a, 15b wird mit hohem Druck gepreßt bzw. kalibriert. Dadurch entstehen im Bereich der Spitze erhebliche Kräfte und es kommt auch zu einer erheblichen Temperaturerhöhung.

Die Herstellung von Zähnen 11 mit Spitzen 13 gemäß Fig. 1 im sintertechnischen Verfahren ist an sich unproblematisch.

Fig. 2 zeigt die gleiche Situation wie in Fig. 1, mit der Abweichung, daß der Zahn 11' eine Spitze 13' mit einem wesentlich kleineren Spitzenwinkel β aufweist.

Es ist bekannt, synchronisierte Kraftfahrzeuggetriebe mit Mehrfachkegelsynchronisierungen auszurüsten. Solche Synchronisierungen erlauben, bei gekoppeltem äußeren und inneren Sychronring, Sperrwinkel von bspw. 45°, die für eine komfortables Durchschalten (Verdrehen des zu schaltenden Rades bzw. Radsatzes nach Herstellen des Gleichlaufs) erforderlich sind.

Wenn man die Vorrichtung 10' gemäß Fig. 2 für einen Winkel β = 45° auslegt, so ergibt dies im Bereich der Kontur 17' am vorderen Ende des Stempels 16' sehr dünne und spitze vordere Enden 18.

Wenn der Stempel 16 mit großer Preßkraft eingefahren wird, ist es in Anbetracht der sehr dünnen Formgebung der Enden 18 zu erwarten, daß die Enden 18 im jeweils benachbarten Material fressen und/oder bereits nach mehreren Arbeitsspielen sich nach außen verbiegen. Ein solches Werkzeug wäre bereits nach kurzem Einsatz nicht mehr brauchbar.

Aufgrund der Festigkeit üblicher Werkzeuge gibt es daher eine Grenze für sintertechnisch herstellbare Sperrwinkel, die bei ca. 55 bis 60° liegt. Dies bedeutet, daß Schaltmuffen für Mehrfachkegelsynchronisierungen, die den Komfortvorteil dieser Synchronbauart, nämlich die bereits erwähnten spitzen Zähne, ausnützen, rein sintertechnisch mit herkömmlichen Mitteln nicht herstellbar sind.

In Fig. 3 ist ein Zahn 20 eines derartigen Synchronisationskörpers perspektivisch dargestellt. Der Zahn 20 steht aus einer Umfangsfläche, bspw. einer Innenoberfläche 21 einer Schiebemuffe 22 vor. Ein vorderer Rand der Schiebemuffe 22 ist bei 23 angedeutet. Es versteht sich, daß der Rand 23 auch näher an dem Zahn 20 oder weiter von diesem entfernt angeordnet sein kann.

Mit 24 ist noch die übliche Verschieberichtung der Schiebemuffe beim Einschalten der Synchronisation angedeutet.

Der Zahn 20 ist im Radialschnitt von näherungsweise trapezförmiger Querschnittsform. Er weist somit eine im wesentlichen ebene Oberseite 25 sowie geneigte Längsseiten 26 auf. Die Längsseiten 26 sind meist gewölbt, und zwar im Querschnitt evolventenförmig, wie in Fig. 3 bei 26' angedeutet. Der Einfachheit halber sind in den Figuren die Längsseiten als ebene Flächen dargestellt. Die eigentliche Spitze wird durch zwei Stirnseiten 27 gebildet, die vorne entlang einer Scheitellinie 28 zusammenlaufen. Die Scheitellinie 28 nimmt relativ zu einer Mittellinie 29 des Zahns 20 einen vorbestimmten Winkel ϕ ein. Der Winkel ϕ kann spitz oder stumpf oder ein rechter Winkel sein.

Dort, wo die Stirnseiten 27 in die Oberseite 25 übergehen, schließen sie miteinander einen Winkel γ ein. In Fig. 3 ist mit durchgezogenen Strichen ein herkömmlicher Zahn von stumpfer Formgebung dargestellt, bei dem der Winkel γ₁ größer ist als die gewünschten z.B. 45°.

Wollte man nun das weiter oben aufgezeigte Problem lösen, so könnte man in einem ersten Arbeitsschritt durch Sintern eine derartige stumpfe Anspitzung mit γ₁ und z.B. γ₁ = 55° erzeugen und dann in einem zweiten, im allgemeinen ohnehin erforderlichen Arbeitsschritt durch sogenanntes "Kalibrieren" eine spitze Anspitzung von z.B. γ₂ = 45° herstellen.

Wenn man dabei entsprechend Fig. 3 so vorgeht, wie dies dort gestrichelt eingezeichnet ist, so wäre dies nicht erfolgreich. Demnach würde nämlich die Zahnspitze einfach von beiden Seiten her zusammengedrückt, bis die durchgezogen eingezeichnete Form in die gestrichelt eingezeichnete Form übergegangen ist, wie in Fig. 3 mit einem Pfeil 31 angedeutet.

Dann würde jedoch im Bodenbereich 30, d.h. im Bereich des Überganges zwischen Zahnkörper und Oberfläche 21 eine erhebliche Scherbelastung auftreten, die wiederum zur Zerstörung von sogenannten Sinterbrücken führen würde. Der auf diese Weise hergestellte spitzere Zahn wäre damit mechanisch instabil und praktisch nicht einsetzbar.

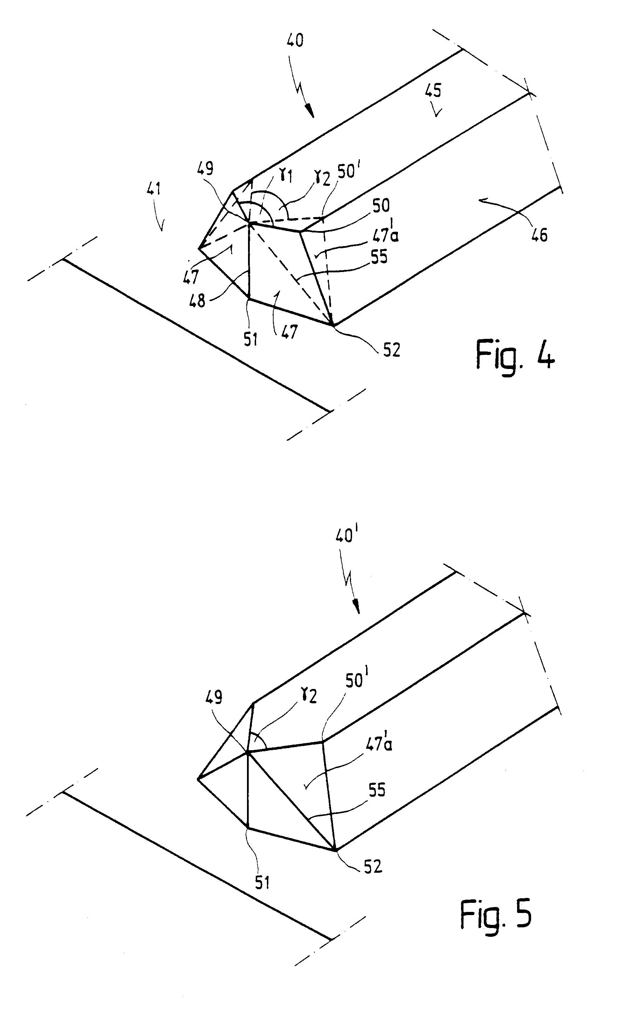

Fig. 4 zeigt wiederum in perspektivischer Darstellung einen Zahn 40, der aus einer Innenoberfläche 41 eines Sychronisationskörpers vorsteht. Der Zahn 40 umfaßt eine Oberseite 45, Längsseiten 46 sowie Stirnseiten 47, die an einer vorderen Scheitellinie 48 zusammenlaufen. Im Bereich der Spitze ist eine mittlere obere Ecke mit 49 bezeichnet. Bei 50 sind seitliche obere Ecken zu erkennen, eine mittlere untere Ecke ist mit 51 bezeichnet und die entsprechenden seitlichen unteren Ecken haben das Bezugszeichen 52. Die in Fig. 4 rechte Stirnseite 47 ist daher von den Ecken 49, 50, 52, 51 (im Uhrzeigersinn) begrenzt.

Um bei diesem Ausführungsbeispiel den stumpferen Winkel γ₁ in einen spitzeren Winkel γ₂ umzuformen, werden die Stirnseiten 47 entlang von Diagonalen 55 abgeknickt. Die Diagonalen 55 verlaufen von der mittlere oberen Ecke 49 schräg nach unten zu den beiden seitlichen unteren Ecken 52. Es ergibt sich somit eine Abflachung bzw. Einprägung insbesondere im Bereich der seitlichen obere Ecke 50, die durch diesen Umformvorgang nach hinten verlagert wird, wie mit 50' in Fig. 4 eingezeichnet. Der obere Abschnitt der Stirnseiten 47 ist nun um die bereits erwähnte Diagonale 55 abgeknickt und in Fig. 4 mit 47a' angedeutet.

Aufgrund dieser Umformung ergibt sich ein spitzerer Winkel γ₂ im Übergang der oberen Abschnitte 47a' der Stirnseiten zur Oberseite 45.

Wie man aus Fig. 4 leicht erkennt, beschränkt sich dieser Umformvorgang auf einen Bereich oberhalb der Oberfläche 41 des Synchronisationskörpers. Im Bereich des Übergangs zwischen der Oberfläche 41 und dem Zahn 40 treten somit keinerlei Belastungen und damit auch keine Scherbelastungen auf, die zu einer Zerstörung von Sinterbrücken führen würden.

Zwar ist richtig, daß sich die spitzere Formgebung γ₂, der Zähne 40 im wesentlichen im oberen Bereich der Zähne 40 ausprägt, es ist jedoch für die Funktion der Synchronisationseinrichtung ohne Belang. Die Zähne des Gegenkörpers greifen nämlich (in Fig. 4 von oben) üblicherweise nicht bis zur vollen Zahntiefe in die Zähne 40 ein (die Überdeckung beträgt in der Praxis 60 % bis 90 %), so daß sie dort im wesentlichen auf die spitzere Anspitzung γ₂ treffen.

Fig. 5 zeigt den Zahn 40' nach erfolgter Umformung.

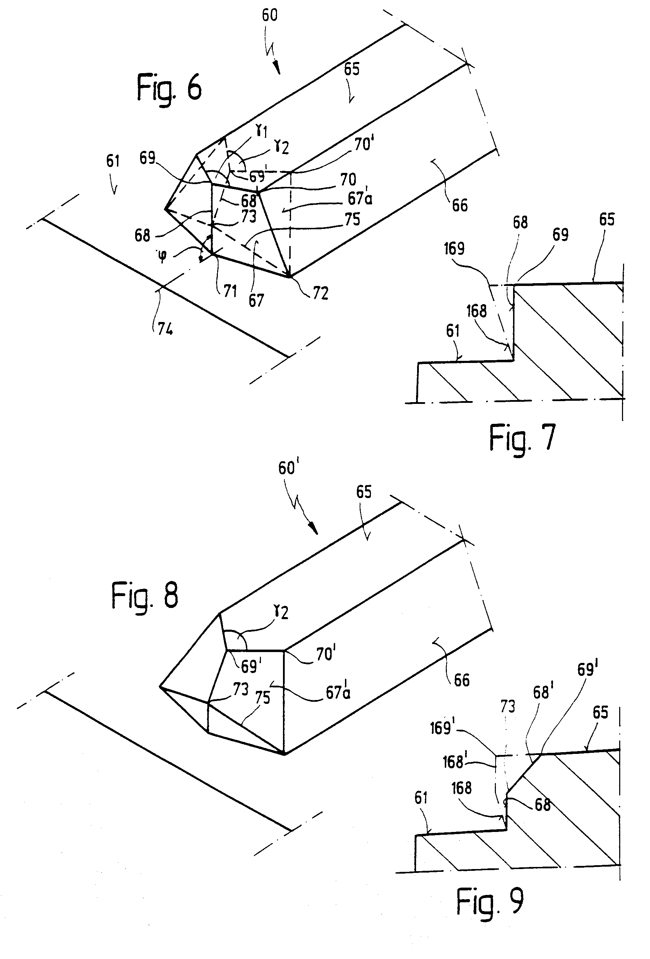

Eine ähnliche Situation ist in den Fig. 6 bis 9 für ein weiteres Ausführungsbeispiel der Erfindung dargestellt.

Ein Zahn 60 steht wieder aus einer Innenoberfläche 61 eines Synchronisationskörpers vor. Der Zahn 60 hat eine Oberseite 65, Längsseiten 66 und Stirnseiten 67, die an einer Scheitellinie 68 zusammenlaufen. Die in Fig. 6 in durchgezogenen Linien dargestellte Formgebung der Zähne 60 entspricht vollkommen derjenigen der Zähne 40 in Fig. 5.

Demzufolge sind die bereits erwähnten Ecken, nämlich die mittlere obere Ecke 69, die seitlichen oberen Ecken 70, die mittlere untere Ecke 71 sowie die seitlichen unteren Ecken 72 vorgesehen.

In Abweichung zum Ausführungsbeispiel gemäß Fig. 4 und 5 wird beim Ausführungsbeispiel der Fig. 6 bis 9 eine Zwischenecke 73 ausgebildet, die z.B. in halber HÖhe der Scheitellinie 68 liegt, aber auch in anderen Höhenpositionen liegen kann.

Denkt man sich nun Diagonalen 75, die von der Zwischenecke 73 zu den beiden seitlichen unteren Ecken 72 verlaufen, so können die Stirnseiten 67 um die Diagonalen 75 nach hinten abgeknickt oder umgeklappt werden.

Da die Diagonalen 75 nicht durch die mittlere obere Ecke 69 laufen, verschiebt sich diese infolge der Umformung nach 69', d.h. nach hinten, in Verschieberichtung gesehen. Die seitlichen oberen Ecken 70 verschieben sich ebenfalls nach hinten, wie mit 70' in Fig. 6 eingezeichnet.

Ingesamt ergibt sich auch hier eine Anspitzung von γ₁ nach γ₂. Der fertig umgeformte Zahn 60' ist in Fig. 8 zum Vergleich ebenfalls perspektivisch in durchgezogenen Linien dargestellt.

Die beiden Schnittdarstellungen gemäß Fig. 7 und Fig. 9 veranschaulichen in durchgezogenen Linien die soeben beschriebenen Verhältnisse. Die Schnitte der Fig. 7 und 9 sind entlang einer Mittellinie 74 in Längsrichtung durch den Zahn 60 geführt.

Man erkennt aus Fig. 9 deutlich, daß nach der Umformung ein unterer Abschnitt 68 der Scheitellinie erhalten bleibt, ehe die Scheitellinie an der Zwischenecke 73 schräg nach hinten abgewinkelt wird, wie bei 68' eingezeichnet.

In Fig. 7 und 9 ist der Fall dargestellt, daß der Winkel ϕ (Fig. 6) 90° beträgt. Die Scheitellinie 68 tritt daher lotrecht aus der Oberfläche 61 aus.

Nun sind aber auch Zahnformen bekannt, bei denen die Scheitellinie 68 unter einem spitzen oder einem stumpfen Winkel relativ zur Verschieberichtung (Mittellinie 74 nach vorne) austritt.

In Fig. 7 und 9 ist strichpunktiert der Fall dargestellt, daß der Winkel ein spitzer Winkel ist, so daß die Zähne 40 nach vorne geneigt sind. In Fig. 7 ist die Scheitellinie mit 168 und die mittlere obere Ecke mit 169 bezeichnet.

Wenn ein derartig geformter Zahn in der beschriebenen Weise umgeformt wird, entsteht bspw. ein oberer abgeknickter Abschnitt der Scheitellinie 168', der wiederum gerade lotrecht zur Oberfläche verläuft.

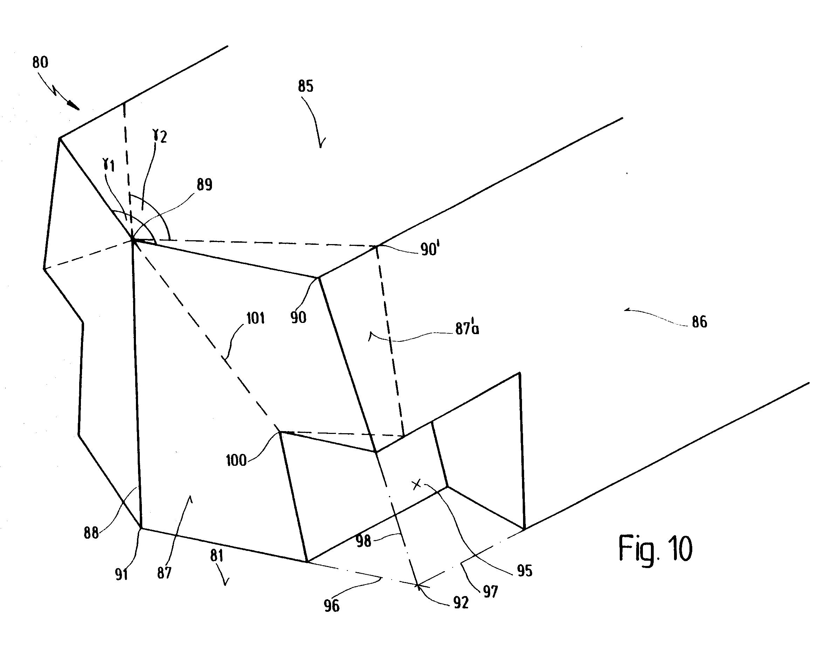

In Fig. 10 ist schließlich noch ein weiteres Ausführungsbeispiel der Erfindung dargestellt, bei dem man sich die Überlegung zunutze macht, an der Stelle, die hinsichtlich der Zerstörung von Sinterbrücken besonders sensibel ist, das dort an sich vorgesehene Material fortzulassen.

Ein Zahn 80 steht in Fig. 10 wiederum aus einer Innenoberfläche 81 eines Synchronisationskörpers vor. Der Zahn 80 hat eine Oberseite 85, Längsseiten 86 und Stirnseiten 87. Die Scheitellinie ist mit 88 bezeichnet. Die bereits mehrfach erwähnten oberen und unteren Ecken sind mit 89, 90, 91 und 92 bezeichnet, wobei die seitlichen unteren Ecken 92 lediglich als gedachte Punkte vorhanden sind.

Man erkennt deutlich, daß im Bereich der seitlichen unteren Ecken 92 ein Eckenbereich 95 ausgespart ist. Der Eckenbereich 95 wird von Abschnitten 96, 97, 98 begrenzt, die den Übergang der Stirnseiten 87 bzw. der Längsseiten 86 zur Innenoberfläche 81 darstellen (96 und 97) bzw. den Übergang zwischen den Stirnseiten 87 und den Längsseiten 86 (98).

Der Eckenbereich 95 erzeugt in der Stirnseite 87 eine innenliegende Ecke 100. Von dieser Ecke 100 läuft eine Diagonale 101 zur mittleren oberen Ecke 89. Um diese Diagonale 101 kann die Stirnseite 87 wieder nach hinten umgeklappt bzw. abgeknickt werden, so daß ein oberer Abschnitt 87a' der Stirnseite 87 entsteht. Die seitlichen oberen Ecken 90 werden dadurch nach hinten verschoben, wie mit 90' angedeutet. Dadurch tritt wiederum eine Anspitzung des Zahnes 80 von γ₁ nach γ₂ ein.

Es versteht sich, daß die in Fig. 10 veranschaulichte Technik mit unterschiedlichen Formgebungen kombiniert werden kann, so z.B. auch mit einer Formgebung gemäß Fig. 6 bis 9.

## Patentansprüche

1. Synchronisationseinrichtung für Getriebe mit einem mit Zähnen (11; 20; 40; 60; 80) versehenen Synchronisationskörper; wobei die Zähne (11; 20; 40; 60; 80) aus einer Oberfläche (21; 41; 61; 81) des Synchronisationskörpers vorstehen und eine radial zu einer Verschieberichtung (24) des Synchronisationskörpers im wesentlichen trapezförmige Querschnittsform aufweisen, wobei ferner die Zähne (11; 20; 40; 60; 80) relativ zur Verschieberichtung (24) angespitzt sind, derart, daß eine vordere Scheitellinie (28; 48; 68; 88) der Spitze unter einem ersten Winkel (ϕ) aus der Oberfläche (21; 41; 61; 81) austritt und sich beidseits der Scheitellinie (28; 48; 68; 88) geneigte, die Spitze bildende Stirnflächen (27; 47; 67; 87) erstrecken, die in einer Oberseite (25; 45; 65; 85) der Zähne (20; 40; 60; 80) einen zweiten Winkel (γ₁) miteinander bilden, dadurch gekennzeichnet, daß die Stirnflächen (47; 67; 87) zur Verkleinerung des zweiten Winkels (γ₂) einen oberen, von der Spitze weg abgeknickten Bereich (47a'; 67a'; 87a') aufweisen.

2. Synchronisationseinrichtung nach Anspruch 1, dadurch gekennzeichnet, daß die Stirnfläche (47) um eine Diagonale (55) abgeknickt ist, die vom oberen Ende der Scheitellinie (48) zum unteren seitlichen Endpunkt (52) der Stirnfläche (47) führt.

3. Synchronisationseinrichtung nach Anspruch 1, dadurch gekennzeichnet, daß die Stirnfläche (67) um eine Diagonale (75) abgeknickt ist, die von einem Punkt (73) auf der Scheitellinie (68, 68') zum unteren seitlichen Endpunkt (72) der Stirnfläche (67) führt, wobei der Punkt (73) vorzugsweise in der unteren Hälfte der Scheitellinie (68, 68') liegt, derart, daß die Scheitellinie zwei zueinander geneigte Abschnitte (68, 68') aufweist, die in dem Punkt (73) aneinanderstoßen.

4. Synchronisationseinrichtung nach Anspruch 2 oder 3, dadurch gekennzeichnet, daß der Bereich am unteren seitlichen Endpunkt der Stirnfläche (87) oberhalb der Oberfläche (81) ausgehöhlt ist.

5. Synchronisationseinrichtung nach einem oder mehreren der Ansprüche 1 bis 4, dadurch gekennzeichnet, daß der erste Winkel (ϕ) relativ zur Verschieberichtung (24) ein spitzer Winkel ist.

6. Synchronisationseinrichtung nach einem oder mehreren der Ansprüche 1 bis 4, dadurch gekennzeichnet, daß der erste Winkel (ϕ) relativ zur Verschieberichtung (24) ein stumpfer Winkel ist.

7. Synchronisationseinrichtung nach einem oder mehreren der Ansprüche 1 bis 4, dadurch gekennzeichnet, daß der erste Winkel (ϕ) relativ zur Verschieberichtung (24) ein rechter Winkel ist.

8. Verfahren zum Anspitzen von Zähnen (20; 40; 60; 80) eines gesinterten Synchronisationskörpers, bei dem die Zähne (11; 20; 40; 60; 80) aus einer Oberfläche (21; 41; 61; 81) des Synchronisationskörpers vorstehen und eine radial zu einer Verschieberichtung (24) des Sychronisationskörpers im wesentlichen trapezförmige Querschnittsform aufweisen, wobei ferner die Zähne (11; 20; 40; 60; 80) relativ zur Verschieberichtung (24) angespitzt sind, derart, daß eine vordere Scheitellinie (28; 48; 68; 88) der Spitze unter einem ersten Winkel (ϕ) aus der Oberfläche (21; 41; 61; 81) austritt und sich beidseits der Scheitellinie (28; 48; 68; 88) geneigte, die Spitze bildende Stirnflächen (27; 47; 67; 87) erstrecken, die in einer Oberseite (25; 45; 65; 85) der Zähne (20; 40; 60; 80) einen zweiten Winkel (γ₁) miteinander bilden und die Zähne (20; 40; 60; 80) beim Verpressen eines Sinterpulvers ausgeformt werden, dadurch gekennzeichnet, daß die Stirnflächen (47; 67; 87) zur Verkleinerung des zweiten Winkels (γ₂) in einem oberen Bereich (47a'; 67a'; 87a') abgeknickt werden.

9. Verfahren nach Anspruch 8, dadurch gekennzeichnet, daß die Stirnfläche (47) um eine Diagonale (55) abgeknickt wird, die vom oberen Ende der Scheitellinie (48) zum unteren seitlichen Endpunkt (52) der Stirnfläche (47) führt.

10. Verfahren nach Anspruch 8, dadurch gekennzeichnet, daß die Stirnfläche (67) um eine Diagonale (75) abgeknickt wird, die von einem Punkt (73) der Scheitellinie (68, 68') zum unteren seitlichen Endpunkt (72) der Stirnfläche (67) führt, wobei der Punkt (73) vorzugsweise in der unteren Hälfte der Scheitellinie (68, 68') liegt, derart, daß die Scheitellinie zwei zueinander geneigte Abschnitte (68, 68') aufweist, die in dem Punkt (73) aneinanderstoßen.

11. Verfahren nach Anspruch 9 ode 10, dadurch gekennzeichnet, daß der Bereich am unteren seitlichen Endpunkt der Stirnfläche (87) oberhalb der Oberfläche (81) ausgehöhlt wird.
